# EUROPEAN PATENT SPECIFICATION

(11) **EP 1 146 784 B1**
(45) Date of publication and mention of the grant of the patent: **21.04.2004**
(21) Application number: 00900799.8
(22) Date of filing: 20.01.2000
(51) Int. Cl.: A01G 7/06, A01G 9/10

(54) **A MULTI-BARREL PLANT INOCULATION GUN**
PFLANZENIMPFPISTOLE MIT MEHREREN DÜSEN
DISPOSITIF A CANONS MULTIPLES SERVANT A INOCULER DES PLANTES

(30) Priority: 24.01.1999 IL 12820799
(43) Date of publication of application: 24.10.2001
(73) Proprietor: Bio-Oz Advanced Biotechnological Agriculture Ltd, 85145 M.P. Hanegev (IL)
(72) Inventor: CHEMO, Ronen, 85145 M.P. Hanegev (IL); MAOZ, Itai, 85145 M.P. Hanegev (IL); YARDEN, Gal, 85145 M.P. Hanegev (IL)
(74) Representative: Schmitz, Jean-Marie
(86) International application number: PCT/IL2000/000039
(87) International publication number: WO 2000/042835

(56) References cited:
- WO-A-96/05721
- DATABASE WPI Section Ch, Week 197718 Derwent Publications Ltd., London, GB; Class C03, AN 1977-32073Y XP002134966 & JP 52 012795 B (INST PHYSICAL & CHEM RES), 9 April 1977 (1977-04-09)
- PATENT ABSTRACTS OF JAPAN vol. 1995, no. 11, 26 December 1995 (1995-12-26) & JP 07 203989 A (HAMAMATSU PHOTONICS KK), 8 August 1995 (1995-08-08)

## Description

### Field of the invention

The present invention relates to a multi-barrel plant inoculation gun (hereinafter called also: MBG) for a rapid large-scale plant anti virus inoculation. The MBG performs the plant anti virus inoculation by simultaneously shooting a plurality of compressed gas jets carrying inoculum solution particles into the inner tissues of plants within the gun's coverage area. The present invention further relates to a combination of the MBG and a conveying mechanism, wherein the conveying mechanism is either for conveying green-house plant trays to the shooting coverage area of the MBG, or for conveying the MBG along rows of plants in a green-house or any other treatment area.

### Background of the invention

A well known method in the field of plant anti virus inoculation is the Cross Protection method. According to this method, the inoculation of a crop against a virulent strain of virus is achieved by infecting the crop with a mild strain of the same virus.

The mechanism by which cross protection operates is not yet fully understood, and there are different proposed hypotheses trying to explain it. Whatever the mechanism is, the present invention deals only with its practical implementation.

It is well known that for the success of the inoculation, it is not essentially required to infect individually every plant, and some certain percentage of it (according to the specific type of inoculum or crop) is enough. However, a minimal infection percentage is needed for the commercial effectiveness of inoculation.

After the infection procedure is accomplished, the mild virus develops inside the plants. At the end of the process (i.e. after the mild virus strain was settled, duplicated and dispersed to all the portions of the plant), the inoculated crops become tenable against the virulent strain of virus. In various types of crops or inoculation procedures (according to the same method), there is a need to repeat the infection procedure once again or even twice (in intervals of a week or two), for better results.

Until now, infecting the plants with the mild strain of virus, is achieved by hand-rubbing of each plant in the greenhouse with the appropriate inoculum, or by using an electric hand leaf blower for blowing the inoculum solution on each plant. Both hand-rubbing and blowing methods are extremely time intensive, and often fail to insure the achievement of the minimal infectious percentage needed for an effective plant inoculation.
WO 96/05721 discloses a method for delivering an effective amount of exogenous chemical substance to a non-woody living tissue of a plant, whereby said substance is applied simultaneously or sequentially with local physical injury inflicted on the tissue of sufficient severity to kill or significantly damage individual cells. The invention also discloses compositions which are particularly adapted for use by the method of the invention, apparatus for delivering exogenous chemical substances by the method of the invention and leaf prepared by the invention. The apparatus taught in WO 96/05721 does not enable the maintenance of constant pressure levels with increasing the number of barrels which is a serious disadvantage.

The aim of the MBG according to the present invention is to effectively inoculate large-scale crops (usually in a greenhouse) by the mild strain of virus, thus saving time and money, and improving the inoculation reliability.

### Summary of the invention

The present invention relates to multi-barrel plant inoculation gun (MBG) for a rapid large-scale plant anti virus inoculation comprising;
(a) liquid container for inoculum solution;
(b) compressed-gas source;
(c) at least one compressed-gas fast-discharge-container having a gas inlet connected to the said compressed-gas source, and a gas outlet connected to a gas fast-discharge-valve;
(d) plurality of jet-injection units each comprised of a body having; a liquid inlet connected to the said liquid container; a gas inlet connected to the said gas fast-discharge-valve; and a jet-outlet (in the context of the present invention called also "barrel") internally connected to the said liquid and gas inlets;
(e) control unit for triggering-on the fast-discharge valve;
(f) chassis for positioning and supporting said elements and their inter-connections;
wherein triggering-on the fast-discharge valve, discharges from the fast-discharge-container a powerful pulse of gas distributed simultaneously to the plurality of jet-injection units through the respective pipes and brought to contact the inoculum solution received from the liquid-container through the respective pipes, for accelerating particles of inoculum-solution and shooting inoculum solution by jets of gas from the jet-outlets into the inner tissues of plants.

According to the preferred embodiment, the MBG is further comprising a conveyor for conveying green-house plant trays under its shooting coverage area.

According to the preferred embodiment the MBG has a computer means and a user-panel for controlling its operation according to operation modes predetermined by its manufacturer or by its user through the user-panel.

Preferably, the conveyor include sensor means supplying to the computer-means data concerning the presence or location of plant trays, and the computer means correlates the shooting of inoculum-carrying jets with the convey of plant trays.

Preferably, the liquid container is a pressure-container connected to the compressed-gas source and having a pressure regulator valve obtaining a constant predetermined pressure adapted to drive out the inoculum-solution from the container in the accurate essential flow useful for the current inoculation job. According to another embodiment, the liquid container works without pressure and supplies the inoculum-solution by means of gravity force or by means of a pump. Preferably, according to both said liquid-container arrangements, an electrical faucet buffers between the container and the jet-injection-units for an improved control on the inoculum-solution consumption.

Preferably, the liquid container include means for whirling the inoculum solution, such as a motored propeller, a gas pipe bubbling within the liquid, a vibration motor vibrating the container or other known whirling means.

Preferably, the pipe connection between the liquid container and the jet-injection units is equipped with a unidirectional valve preventing a reverse flow of liquid or gas which may result during the fast-discharge of a gas pulse.

Preferably, the jet-injection-units are positioned on a flat matrix plate having crosswise orifices arranged in lines and rows, such that each jet-outlet (barrel) of the jet-injection-units is fixed vertically within one orifice (preferably by using integral threading made in the plate material).

Preferably, the connection between the matrix plate and the chassis is through an adjustable telescopic mechanism (or other adjustable acceptable mechanism) allowing to change the height (and/or orientation) of the plate for an optimal adaptation to the type and arrangement of the inoculated plants.

According to another embodiment, the MBG is further comprising conveying means for being propelled along green-house plant rows.

In the context of the present invention the term "gas source" refers to any type of gas supplier known in the art, either if it is carried by the MBG chassis or it is an external unit connected to the MBG by means of a gas hose. It may be an air compressor, a gas reservoir, a gas cylinder. Preferably the gas is air, however other gas types may be used as well.

The MBG may comprise mechanical or electromechanical means for changing or adjusting the orientation, height or lateral position of the matrix-plate relatively to the chassis. Thus, the MBG can be adapted for use with various types of plants, (or plant trays) having different dimensions, shapes, planting arrangements, or inoculation requirements.

According to another variation, the MBG is further comprises sensor means adapted to recognize the presence of plants below the matrix-plate and transmitting this data to the controlling unit, for automatically activating the MBG shooting, or for halting the convey mechanism of the machine at the end of a plant row.

Preferably, the inoculum solution is a hetrogenic solution containing particles (such as carborundum particles) useful for insertion into the inner tissues of plants when accelerated by the compressed gas. Thus, preferably the MBG, further comprises means for whirling the inoculum solution (within the liquid container) for providing a homogenize dispersion of the particles within the solution. Such means are an electrical mixer, or a gas pipe ended near the bottom of the liquid container for mixing the liquid by means of gas flow.

### Detailed description of the invention

The present invention solves the problem of reducing the pressure in each barrel with increasing the number of barrels by combining the following elements: at least one-compressed-gas fast-discharge container (28) having a gas inlet connected to a compressed-gas source, and a gas outlet connected to a gas fast-discharge-valve (29); and a control unit for triggering-on fast discharge valve. the compressed-gas fast-discharge container accumulates the gas pressure between successive operations, and then in a short period of time the accumulated pressure is discharged at once from all barrels. Triggering on the fast discharge valve, discharges from the fast-discharge-container a powerful pulse of gas distributed simultaneously to the plurality of jet injections units through the respective pipes, in order to accelerate the particles of inoculum-solution and shoot inoculum solution by jets of gas into the inner tissues of plants.

The present invention will be further described in detail by Figures 1-3. These figures are solely intend to describe one preferred embodiment of the MBG according to the present invention, and in no manner intend to limit the scope of the invention.

### Brief description of the figures:

Figure 1 illustrates an isometric view of a chassis and a plant-tray conveyor of an MBG according to the present invention.
Figure 2 illustrates a schematic diagram of three jet-injection unit of the MBG, and their associate connections as a part of a plurality of similar jet-injection units.
Figure 3 illustrates in detail a schematic diagram of the liquid-container of Figure 1.

### Detailed description of the invention:

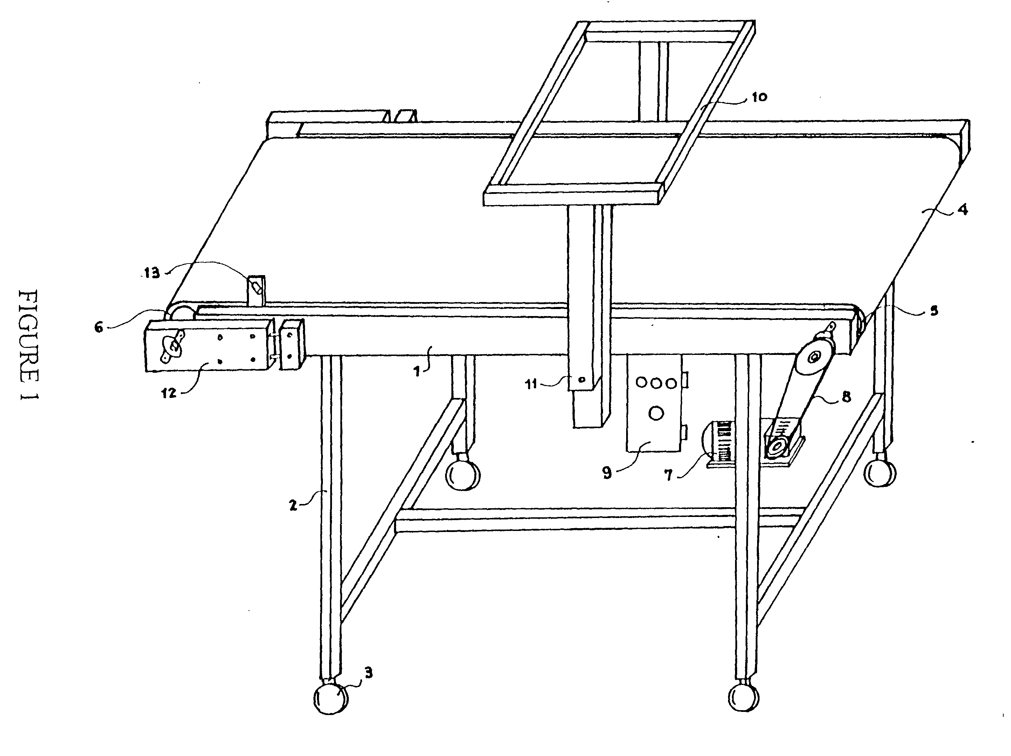

Figure 1 illustrates an isometric view of a chassis and a plant-tray conveyor of an MBG according to the present invention. In this embodiment the chassis is a wheeled table (1) comprised of a supporting frame (2) having wheels (3) allowing moving from place to place comfortably, and a plant conveyor having a conveying-belt (4), moving endlessly around a drive-cylinder (5) and a tense-cylinder (6). The drive-cylinder (5) is driven by an electrical-motor (7) and a transmission belt (8). The conveying belt (4) is tensed by the drive-cylinder (6), and its associate tense-mechanism (12). The frame height can be made changeable by including a telescopic mechanism (or other acceptable height-adjusting mechanism) to the upright supports of the frame. The MBG user may control the conveyor speed through a user-panel (9) which controls the speed of the motor (7). Plant trays placed on the conveying belt (4) right side, are conveyed to a coverage area of the MBG below the matrix-plate support (10). The relative height of the matrix-plate (not shown in this figure) is adjustable by a telescopic vertical support (11). The plant tray within the MBG coverage area is bombarded by the MBG and then conveyed to the left of the conveyor. Mechanical sensor (13) (may be any other known sensor such as Photo-electric sensor) recognizes the presence of a treated (inoculated) plant tray and stops the conveyor until being removed. The inoculation can be made either during a successive convey, or during stops in the convey, as selected by the user through the user-panel (9).

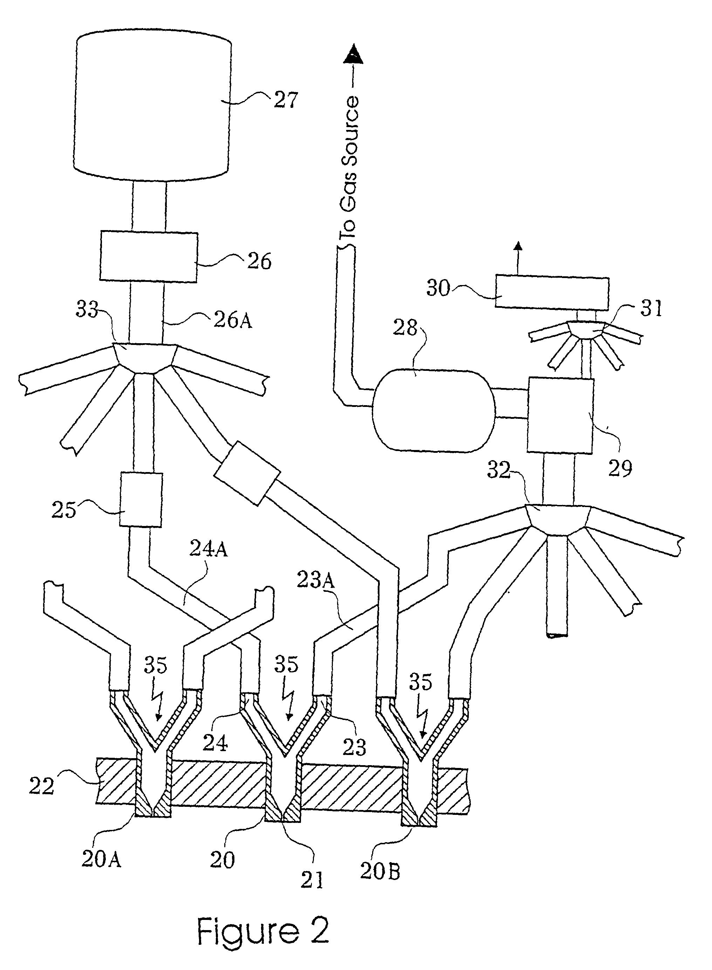

Figure 2 illustrates a schematic diagram of three jet-injection units of the MBG, and their associate connections as a part of a plurality of similar jet-injection units. Each jet-injection unit (35) (illustrated in a vertical cross-section view) is comprised of a body (20) (20A)(20B) having; a liquid inlet (24), a gas inlet (23), and a jet-outlet (21) internally connected to the said liquid and gas inlets. The liquid inlet (24) is connected to the liquid container (27) through a pipe (24A), a unidirectional valve (25) and an electrical faucet (26). The electrical faucet controls the flow of inoculum solution to the illustrated jet injection units (35) and to a plurality of similar jet-injection units (not seen in this figure), through the main pipe (26A) and the pipe-junction (33) to which the plurality of said units are connected. The gas inlet (23) is connected to a gas fast-discharge-valve (29) together with the gas inlets of a plurality of similar units which all are connected through the same gas-pipe junction (32). The fast-discharge valve (29) is connected to a fast-discharge-container (28), supplying a pulse of compressed-air to all the injection-units connected to the junction (32), always when the fast discharge valve (29) is triggered-on. The fast-discharge-container (28) is fed with a gas from a gas source (not seen in this figure) trough the gas inlet (34). The fast discharge valve (29) is a pneumatic valve controlled pneumatically by a pneumatic-control valve (30). The pneumatic control valve (30) is triggered-on by an electric signal received from a computer means of the MBG. A plurality of fast discharge valves (29) are connected to the pneumatic control valve (30) through a pneumatic control junction (31), wherein the gas inlet of each fast-discharge valve (29) is connected to a particular fast-discharge-container, and the gas outlet of the same valve (29) is connected to a plurality of jet-injection units. Thus, the total number of jet-outlets (barrels) of the MBG is a multiplication of the number of jet-injection units connected to each single fast discharge valve (29) with the total number of the fast discharge valves. The exact number of jet-injection units connected commonly to a single fast discharge container (28) and associate valve (29) may be calculated by a designer as a function of the length and width of the gas pipes, the gas capacity of the containers (28), the characteristics of the valve (29) and the jet-injection units (20), and the required jet pressure at the jet-outlets.

The characteristics of the jet-injection unit are mainly resulting from the dimensions (aperture diameter and width) of the jet-outlet (21), trough which pass the inoculation outlet jet. The aperture diameter is designed small enough such that inoculum solution cannot pass it without the push of a gas pulse received from the fast-discharge-container through the fast discharge valve. The electrical faucet (26) is opened periodically in the intervals between gas pulses, for supplying to all the injection-units a restricted dose of inoculum solution which is then delayed adjacent to the jet outlet aperture, waiting for the next pulse of gas.

Each jet injection unit is fixed in one from a plurality, of transverse holes made in a matrix-plate (22) which a small part of it is seen in this figure in a cross sectional view. The complete matrix-plate is to be positioned within the matrix-plate support (10) seen in Figure 1 with the jet outlets oriented downwardly. Preferably each get injection units is comprised of an upper part having the gas and the liquid inlets and a lower part having the jet outlet, both parts are screwed into the matrix plate transverse holes by means of matching screw-threads.

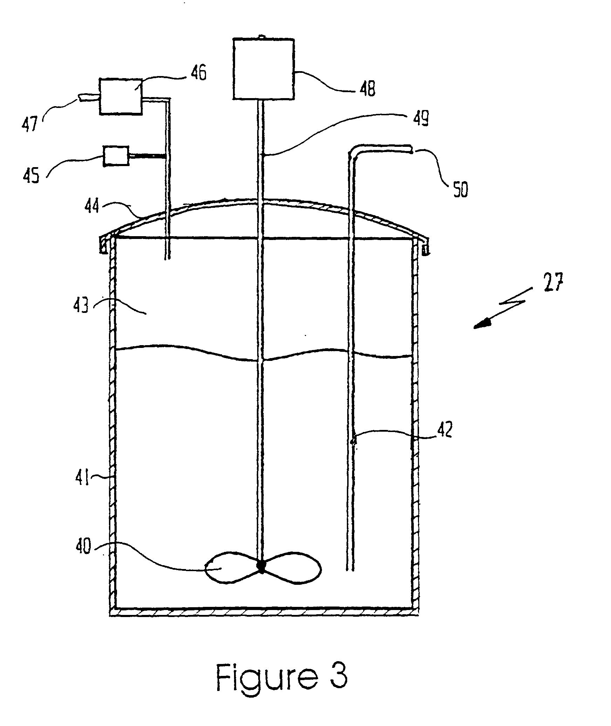

Figure 3 illustrates in detail a schematic diagram of the liquid-container (27) of Figure 1. This container is a pressure container comprised of a container body (41), a container cover (44), a mixer (40) driven by a piston motor (48) through the mixer shaft (49), a gas pressure inlet (47) having a pressure regulator valve (46), a security valve (45), and a liquid outlet (50) for supplying inoculum solution to the electrical faucet (26) of Figure 1. The hetrogenic inoculum solution is whirled by the mixer for insuring its unity, and driven out through the outlet pipe (42) by means of the gas (43) pressuring the liquid in a constant pressure regulated by the regulator valve (46) and protected by the security valve (45). Thus, a controlled flow of inoculum solution is always provided to the jet-injection unit, without the influence of the remaining amount of liquid within the container.

## Claims

1. A multi-barrel plant inoculation gun for a rapid large-scale plant anti virus inoculation comprising;
(a) liquid container for inoculum solution (27);
(b) compressed-gas source;
(c) at least one compressed-gas fast-discharge-container (28) having a gas inlet connected to the said compressed-gas source, and a gas outlet connected to a gas fast-discharge-valve (29);
(d) plurality of jet-injection units (35) each comprised of a body (20) having; a liquid inlet (24) connected to the said liquid container; a gas inlet (23) connected to the said gas fast-discharge-valve (29); and a jet-outlet (21) internally connected to the said liquid and gas inlets;
(e) control unit for triggering-on the fast-discharge valve;
(f) chassis for positioning and supporting said elements and their inter-connections;
wherein triggering-on the fast-discharge valve (29), discharges from the fast-discharge-container (28) a powerful pulse of gas distributed simultaneously to the plurality of jet-injection units (35) through the respective pipes and brought to contact the inoculum solution received from the liquid-container (27) through the respective pipes, for accelerating particles of inoculum-solution and shooting inoculum solution carried by jets of gas from the jet-outlets (21) into the inner tissues of plants.

2. A multi-barrel plant inoculation gun according to claim 1, further comprising a conveyor for conveying green-house plant trays under its shooting coverage area.

3. A multi-barrel plant inoculation gun according to any of the previous claims, having a computer means and a user-panel for controlling its operation.

4. A multi-barrel plant inoculation gun according to any of the previous claims, further comprising sensor means supplying to the computer-means data concerning the presence or location of plant trays, and the computer means correlates the shooting of inoculum-carrying jets with the convey of plant trays.

5. A multi-barrel plant inoculation gun according to any of the previous claims, wherein the liquid container is a pressure-container connected to the compressed-gas source and having a pressure regulator valve obtaining a constant predetermined pressure adapted to drive out the inoculum-solution from the container in the accurate essential flow useful for the current inoculation job.

6. A multi-barrel plant inoculation gun according to any of the previous claims, having an electrical faucet buffers between the container and the jet-injection-units for controlling the consumption of inoculum-solution.

7. A multi-barrel plant inoculation gun according to any of the previous claims, wherein the liquid container include whirling means for whirling the inoculum solution.

8. A multi-barrel plant inoculation gun according to any of the previous claims, wherein the pipe connection between the liquid container and the jet-injection units is equipped with a unidirectional valve preventing a reverse flow of liquid or gas which may result during the fast-discharge of a gas pulse.

9. A multi-barrel plant inoculation gun according to any of the previous claims, wherein the jet-injection-units are positioned on a flat matrix plate having crosswise orifices arranged in lines and rows, such that each jet-outlet of the jet-injection-units is fixed vertically within one orifice.

10. A multi-barrel plant inoculation gun according to any of the previous claims, wherein the connection between the matrix plate and the chassis is through an adjustable mechanism allowing to change the height of the plate for an optimal adaptation to the type and arrangement of the inoculated plants.

11. A multi-barrel plant inoculation gun according to any of the previous claims, further comprising conveying means for being propelled along green-house plant rows.

12. A multi-barrel plant inoculation gun according to any of the previous claims, further comprising sensor means adapted to recognize the presence of plants below the matrix-plate and transmitting this data to the computer means.

## Patentansprüche

1. Eine mehrläufige Pflanzenimpf-Injektionspistole für eine rasche großvolumige Anti-Virus-Impfung von Pflanzen, umfassend:
einen Flüssigkeitsbehälter für Impflösung (27);
eine Quelle für Gas unter Druck;
zumindest einen Druckgas-Schnellabgabebehälter (28) mit einem mit besagter Druckgasquelle verbundenen Gaseinlass und einem mit einem Gas-Schnellabgabeventil (29) verbundenen Gasauslass;
eine Vielzahl von Strahlinjektionseinheiten (35), die jede aus einem Körper (20) bestehen, der einen mit besagtem Flüssigkeitsbehälter verbundenen Flüssigkeitseinlass (24) aufweist; einen mit besagtem Gas-Schnellabgabeventil (29) verbundenen Gaseinlass (23); und einen innerlich mit besagten Flüssigkeits- und Gaseinlässen verbundenen Strahlauslass (21);
eine Steuereinheit zum Auslösen des Schnellabgabeventils;
ein verfahrbares Untergestell zum Positionieren und Tragen besagter Elemente und deren Verbindungen;
wobei das Auslösen des Schnellabgabeventils (29) einen kraftvollen Gaspuls aus dem Schnellabgabebehälter (28) entlädt, der simultan durch die entsprechenden Leitungen zu der Vielzahl von Strahlinjektionseinheiten (35) verteilt und mit der vom Flüssigkeitsbehälter (27) durch die entsprechenden Leitungen empfangenen Impflösung in Kontakt gebracht wird, um Impflösungspartikel zu beschleunigen und von Gasstrahlen aus den Strahlauslässen (21) getragene Impflösung in die inneren Gewebe von Pflanzen zu schießen.

2. Eine mehrläufige Pflanzenimpfpistole gemäß Anspruch 1, die weiterhin ein Förderband zum Befördern von Gewächshaus-Pflanzentabletts unter ihrem Schußbereich umfasst.

3. Eine mehrläufige Pflanzenimpfpistole gemäß einem der vorgenannten Ansprüche, die ein Computermittel und ein Benutzerpaneel zur Steuerung ihres Betriebs aufweist.

4. Eine mehrläufige Pflanzenimpfpistole gemäß einem der vorgenannten Ansprüche, die weiterhin Sensormittel umfasst, die dem Computermittel Daten liefern, die das Vorhandensein oder den Ort von Pflanzentabletts betreffen, und das Computermittel das Verschießen impfstofftragender Strahlen mit dem Transport von Pflanzentabletts korreliert.

5. Eine mehrläufige Pflanzenimpfpistole gemäß einem der vorgenannten Ansprüche, wobei der Flüssigkeitsbehälter ein mit der Druckgasquelle verbundener Druckbehälter ist und ein Druckregelventil aufweist, das einen konstanten vorbestimmten Druck erhält, der zum Austreiben der Impflösung aus dem Behälter in dem präzisen notwendigen Fluss, der für den laufenden Impfvorgang nützlich ist, ausgebildet ist.

6. Eine mehrläufige Pflanzenimpfpistole gemäß einem der vorgenannten Ansprüche, die zur Steuerung des Verbrauchs von Impflösung einen elektrischen Leitungshahnpuffer zwischen dem Behälter und den Strahlinjektionseinheiten aufweist.

7. Eine mehrläufige Pflanzenimpfpistole gemäß einem der vorliegenden Ansprüche, wobei der Flüssigkeitsbehälter Wirbelmittel zum Wirbeln der Impflösung enthält.

8. Eine mehrläufige Pflanzenimpfpistole gemäß einem der vorgenannten Ansprüche, wobei die Leitungsverbindung zwischen dem Flüssigkeitsbehälter und den Strahlinjektionseinheiten mit einem Einrichtungsventil ausgestattet ist, das einen Rückfluss von Flüssigkeit oder Gas verhindert, der während des Schnellausstoßes eines Gaspulses auftreten könnte.

9. Eine mehrläufige Pflanzenimpfpistole gemäß einem der vorgenannten Ansprüche, wobei die Strahlinjektionseinheiten auf einer flachen Matrizenplatte positioniert sind, die kreuzweise Öffnungen aufweist, die in Linien und Reihen angeordnet sind, sodass jeder Strahlauslass der Strahlinjektionseinheiten vertikal innerhalb einer Öffnung fixiert ist.

10. Eine mehrläufige Pflanzenimpfpistole gemäß einem der vorgenannten Ansprüche, wobei die Verbindung zwischen der Matrizenplatte und dem verfahrbaren Untergestell durch einen einstellbaren Mechanismus verläuft, der das Verändern der Höhe der Platte zwecks optimaler Anpassung an Typ und Anordnung der geimpften Pflanzen gestattet.

11. Eine mehrläufige Pflanzenimpfpistole gemäß einem der vorgenannten Ansprüche, die weiterhin Fördermittel zu ihrer Weiterbewegung entlang Reihen von Gewächshauspflanzen umfasst.

12. Eine mehrläufige Pflanzenimpfpistole gemäß einem der vorgenannten Ansprüche, die weiterhin Sensormittel umfasst, die zum Erkennen des Vorhandenseins von Pflanzen unter der Matrizenplatte und dem Übertragen dieser Daten an das Computermittel angepasst sind.

## Revendications

1. Pistolet d'inoculation de plantes du type à canon multiple pour une inoculation rapide de plantes à grande échelle, comprenant :
(a) un récipient de liquide pour une solution d'inoculum (27) ;
(b) une source de gaz sous pression ;
(c) au moins un récipient (28) d'expulsion rapide d'un gaz sous pression possédant une entrée pour le gaz raccordé à ladite source de gaz sous pression et une sortie pour le gaz raccordée à une soupape d'expulsion rapide de gaz (29) ;
(d) plusieurs unités d'injection par jet (35) comprenant chacune un corps (20) possédant une entrée pour le liquide (24) raccordée audit récipient de liquide ; une entrée (23) pour le gaz raccordée à ladite soupape d'expulsion rapide de gaz (29) ; et une sortie par jet (21) soumise à un raccordement interne auxdites entrées pour le liquide et pour le gaz ;
(e) une unité de commande pour déclencher la soupape d'expulsion rapide ;
(f) un châssis pour positionner et supporter lesdits éléments et leur interconnexions ;
dans lequel le déclenchement de la soupape d'expulsion rapide (29) expulse, à partir du récipient à expulsion rapide (28), une impulsion puissante de gaz distribué de manière simultanée auxdites plusieurs unités d'injection par jet (35) via les tuyaux respectifs et amené en contact avec la solution d'inoculum provenant du récipient de liquide (27) via les tuyaux respectifs pour accélérer des particules de solution d'inoculum et pour propulser la solution d'inoculum transportée par des jets de gaz depuis les sorties par jet (21) jusqu'à l'intérieur des tissus des plantes.

2. Pistolet d'inoculation de plantes du type à canon multiple selon la revendication 1, comprenant en outre un transporteur pour transporter des clayettes de serre en dessous d'une zone couverte par la propulsion.

3. Pistolet d'inoculation de plantes du type à canon multiple selon l'une quelconque des revendications précédentes, possédant un moyen d'ordinateur et un panneau de commande pour commenter la mise en service de ce dernier.

4. Pistolet d'inoculation de plantes du type à canon multiple selon l'une quelconque des revendications précédentes, comprenant en outre un moyen de détection acheminant au moyen d'ordinateur des données concernant la présence ou la localisation des clayettes de plantes, le moyen d'ordinateur établissant une corrélation entre les jets de transport d'inoculum et le transport des clayettes de plantes.

5. Pistolet d'inoculation de plantes du type à canon multiple selon l'une quelconque des revendications précédentes, dans lequel le récipient de liquide est un récipient sous pression raccordé à la source de gaz sous pression et possédant une soupape de réglage de pression qui permet d'obtenir une pression prédéterminée constante conçue pour entraîner la solution d'inoculum à l'extérieur du récipient sous la forme du courant essentiel précis, utile pour le travail d'inoculation en question.

6. Pistolet d'inoculation de plantes du type à canon multiple selon l'une quelconque des revendications précédentes, possédant un tampon sous forme de robinet électrique entre le récipient et les unités d'injection par jet pour régler la consommation de la solution d'inoculum.

7. Pistolet d'inoculation de plantes du type à canon multiple selon l'une quelconque des revendications précédentes, dans lequel le récipient de liquide englobe un moyen de tourbillonnement pour faire tourbillonner la solution d'inoculum.

8. Pistolet d'inoculation de plantes du type à canon multiple selon l'une quelconque des revendications précédentes, dans lequel le raccord de tuyau entre le récipient de liquide et les unités d'injection par jets est équipé d'une soupape unidirectionnelle pour empêcher un écoulement en retour du liquide ou du gaz, qui pourrait se produire au cours de l'expulsion rapide d'une impulsion de gaz.

9. Pistolet d'inoculation de plantes du type à canon multiple selon l'une quelconque des revendications précédentes, dans lequel les unités d'injection par jets sont positionnées sur une plaque matricielle plate possédant des orifices transversaux disposés en ligne et en rangs, de telle sorte que chaque sortie par jet des unités d'injection par jets est fixée verticalement à l'intérieur d'un orifice.

10. Pistolet d'inoculation de plantes du type à canon multiple selon l'une quelconque des revendications précédentes, dans lequel la connexion entre la plaque matricielle et le châssis est mise en oeuvre via un mécanisme réglable permettant de changer la hauteur de la plaque pour une adaptation optimale au type et à l'arrangement des plantes inoculées.

11. Pistolet d'inoculation de plantes du type à canon multiple selon l'une quelconque des revendications précédentes, comprenant en outre un moyen de transport destiné à être propulsé le long des rangées de plantes de la serre.

12. Pistolet d'inoculation de plantes du type à canon multiple selon l'une quelconque des revendications précédentes, comprenant en outre un moyen de détection conçu pour reconnaître la présence de plantes en dessous de la plaque matricielle et pour transmettre cette donnée au moyen d'ordinateur.
